# EUROPÄISCHE PATENTANMELDUNG

(11) **EP 3 498 087 A1**
(43) Veröffentlichungstag der Anmeldung: **19.06.2019**
(21) Anmeldenummer: 18212084.0
(22) Anmeldetag: 12.12.2018
(51) Int. Cl.: A01G 13/02, A01C 5/02, A01C 7/02, A01G 23/02, A01G 9/029

(54) **VORRICHTUNG ZUR ANZUCHT UND ZUM SCHUTZ VON FORST- UND/ODER KULTURPFLANZEN, DEREN VERWENDUNG, PFLANZVORRICHTUNG SOWIE VERFAHREN ZUR ANZUCHT UND ZUM SCHUTZ VON FORST- UND/ODER KULTURPFLANZEN**

(30) Priorität: 13.12.2017 DE 102017011547
(71) Anmelder: Wagner, Johannes, 91792 Stopfenheim (DE)
(72) Erfinder: WAGNER, Johannes, 91792 Stopfenheim (DE); BRUNNER, Marc, 91723 Windsfeld/Dittenheim (DE)
(74) Vertreter: Samson & Partner Patentanwälte mbB

(57) **Zusammenfassung**

Die Erfindung betrifft eine Vorrichtung (1) zur Anzucht und zum Schutz von Forst- und/oder Kulturpflanzen umfassend: eine Trägereinheit (3), die aus einem Substrat besteht und deren Volumen durch Fluidaufnahme vergrößerbar ist, eine um die Trägereinheit (3) aufsetzbare Schutzstruktur (5), wobei die Dimensionen der Trägereinheit (3) und der Schutzstruktur (5) derart aufeinander abgestimmt sind, dass im Ausgangszustand der Trägereinheit (3) die Schutzstruktur (5) lösbar um die Trägereinheit (3) aufsetzbar ist und nach Fluidaufnahme der Trägereinheit (3) beide fest miteinander verbunden sind. Die Erfindung betrifft ferner eine Pflanzvorrichtung zum Einpflanzen einer Vorrichtung zur Anzucht und zum Schutz von Forst- und/oder Kulturpflanzen. Die Erfindung betrifft auch ein Verfahren zur Anzucht und zum Schutz von Forst- und/oder Kulturpflanzen mittels einer solchen Vorrichtung (1) umfassend die Schritte: Aufsetzen der Schutzstruktur (5) um die Trägereinheit (3) und Fluidzufuhr zur Volumenvergrößerung der Trägereinheit (3) und dadurch Bilden einer festen Verbindung zwischen Schutzstruktur (5) und Trägereinheit (3).

## Beschreibung

Die Erfindung betrifft eine Vorrichtung zur Anzucht und zum Schutz von Forst- und/oder Kulturpflanzen gemäß dem Oberbegriff des Anspruchs 1.

Die Erfindung betrifft auch die Verwendung der Vorrichtung zur Anzucht und Pflanzung von Forst- und/oder Kulturpflanzen sowie ein Verfahren zur Anzucht und Pflanzung von Forst- und/oder Kulturpflanzen. Die Erfindung betrifft ferner eine Pflanzvorrichtung zum Einpflanzen einer Vorrichtung zur Anzucht und zum Schutz von Forst- und/oder Kulturpflanzen.

### Stand der Technik

Pflanzhülsen und Verbissschutzvorrichtungen sind in unterschiedlichen Ausgestaltungen bekannt, insbesondere aus der Forst- und Waldwirtschaft. Verbissschutzvorrichtungen können mechanisch, beispielsweise als Umzäunung von einem oder mehreren Einzelbäumen oder ganzen Kulturen, vorgesehen sein. Ferner ist es bekannt für den Einzelbaumschutz beispielsweise Drahtgeflechte oder Gitter, insbesondere in Kombination mit Holzlatten, Pfosten etc. einzusetzen.

Auch sind insbesondere aus dem Wein- und Gartenbau Pflanzhülsen bekannt, um als Schutz vor Naturgewalten wie etwa Hagel, Sturm und Starkregen oder aber auch Wildverbiss etc. zu schützen.

Darüber hinaus sind beispielsweise rein chemische oder biologische Verbissschutzmittel etwa Certosan zur unmittelbaren Ausbringung an einer Zierkultur- oder Forstpflanze. Beispielsweise werden solche Verbissschutzmittel entweder aufgestrichen oder aufgesprüht, insbesondere auf den Haupt- und Leittrieb, so dass eine Wildvergrämung erfolgt. Auch sind beispielsweise Verbissschutzkappen als ganzjähriger mechanischer Terminaltriebschutz vorgesehen, die beispielsweise aus einem flexiblen UV-stabilisierten Polyethylen oder PE-Stoffen bestehen und ganzjährig an einer Pflanze verbleiben sollen. Nachteilhaft müssen solche Verbissschutzkappen einzeln auf gepflanzte Bäume oder Jungpflanzen aufgesteckt werden und können beispielsweise aufgrund von Witterung oder anderen Beschädigungen abfallen, weshalb sie erneuert werden müssen.

Daneben ist es auch bekannt, Metallgitterstrukturen in verschiedensten Ausgestaltungen beispielsweise als Metallgitterhülse nachträglich um gepflanzte Jungpflanzen auszurichten.

Nachteilhaft sind bekannte Verbissschutzvorrichtungen kostenintensiv in der Herstellung und Ausbringung. Auch müssen diese zumeist zurückgebaut werden, was wiederum Mannarbeitsstunden anfallen lässt und damit zusätzliche Kosten.

Auch ist es bekannt, insbesondere in Baumschulen wurzelnackte/unterschnittene Forst- und Kulturpflanzen heranzuziehen. Dabei wird das Saatgut in Saatbeeten ausgebracht, die anzuziehenden Pflanzen verbleiben ca. 2 bis 3 Jahre in der Baumschule. Die Wurzeln der wurzelnackten Pflanzen werden bei Entnahme aus den Pflanzbeeten und vor Umsetzen in Container beschnitten, was zu einer Wurzeldegradierung führen kann. Die kann oftmals zu hohen Ausfällen der Pflanzen beim Auspflanzen etwa im Wald führen. Der Ausfall hier kann bis zu 50 und mehr Prozent betragen.

Allgemein wird bei der Anzucht oder beim Anzuchtverfahren für Forstpflanzen zwischen wurzelnackten Pflanzen und der Anzucht zu Ballenpflanzen unterschieden. Wurzelnackte Pflanzen werden in der Regel für Aufforstungen im Flachland verwendet. Auf schwierigen Standorten jedoch werden meist Ballenpflanzen verwendet. Insbesondere liegt dabei ein Schwerpunkt in der Schutzwaldpflege und Aufforstung, insbesondere in Gebirgslagen. Die Ballenpflanzen haben einen Erdballen um die Wurzeln, die vollständig davon umgeben sind.

Insbesondere die Tanne als Pfahlwurzler oder auch Ahorn oder andere Edellaubhölzer werden beschnitten, was zu einem Verringern der Anwachsquote führen kann. Auch wird vom sogenannten Pflanzschock gesprochen, wenn die Baumschulware im Wald ausgebracht und eingepflanzt wird. Dies kann bis zum Eingehen oder Nicht-Anwachsen des jeweiligen Pflanzlings oder Sämling führen.

Auch sind verschiedene Pflanzverfahren und Anzuchtmethoden aus Baumschulen bekannt, bei denen beispielsweise ein sogenannter Quickpott oder ein Hokoplast oder Liechtensteiner-Container für die Anzucht verwendet wird. Jedoch ist hierzu meist zu wenig Erde für eine freie Wurzelentwicklung vorhanden.

Aus der DE 10 2009 003 164 B4 ist eine Pflanzhülse zum Schutz von Kulturpflanzen während deren Wachstumsphase mit einer Wandung aus wenigstens einem Wandmaterial und einem Lumen bekannt, bei der die Pflanzhülse aufgrund ihrer physikalischen Eigenschaften und/oder ihrer chemischen Ausgestaltung beziehungsweise Ausstattung biostatische und/oder Biozid-Eigenschaften aufweist.

Die DE 195 48 707 A1 offenbart ein Verfahren zur Herstellung eines Gebrauchsgegenstandes aus einem zumindest im Wesentlichen biologisch abbaubaren und/oder kompostierbaren Material. Im Prinzip handelt es sich hierbei um einen Anzuchttopf oder Blumentopf aus einem biologisch abbaubaren Material.

US 2008/0078117 A1 offenbart ein Verfahren zur Aufnahme von Pflanzen beziehungsweise gezogenen Sämlingen in ein Netz, das vor Wildverbiss schützen soll. Die aufgezogene Pflanze wird in einer Röhre eingesetzt und dann ein elastisches Netz übergezogen. Der Wurzelballen und das Netz bilden zusammen keine feste Verbindung sondern sind beabstandet voneinander angeordnet; beim Einpflanzen stabilisiert erst die Erde die Kombination. Beim Überziehen des Netzes über den Pflanzling und Einsetzen des Pflanzlings in die Röhre kann es zu Beschädigungen an der Pflanze kommen.

Schließlich offenbart DE 20 2013 195 741 U1 einen Formkörper oder auch Quellkörper aus Kokosfaser und Terra Preta, der als ein Pflanztopf oder Quelltopf ausgestaltet sein kann. Dieser ist mit einem Netz beispielsweise aus Baumwollgase oder Polypropylen umgeben.

Der Quelltopf an sich ist ein gepresstes trockenes Material, das in verschiedenen Substratzusammensetzungen mit Kokosfaser und Terra Preta oder anderen Erden beliebig ausgestaltet sein kann. Bei Fluid oder Wasserzugabe vergrößert der Quelltopf sein Volumen und ermöglicht die Anzucht eines Sämlings. Vom Markt her sind verschiedene Quelltöpfe, beispielsweise von der Firma Jiffy aus Norwegen, bekannt.

In der Forstwirtschaft werden üblicherweise zur Aufforstung von Schadflächen, insbesondere im Hochgebirge bei Schutzwäldern mehrjährige Containerpflanzen verwendet. Einerseits ermöglichen diese eine flexible und nicht weniger termingebundene Arbeitsweise und sollen teilweise auch höhere Anwuchserfolge haben. Nachteilig ist ein mehrjähriges Aufziehen bzw. Anziehen in einer Baumschule mit hohen Kosten verbunden. Auch decken die derzeitigen mehrjährigen verfügbaren Pflanzlinge nicht den aktuellen Bedarf ab.

### Aufgabe und Lösung der Erfindung

Vor diesem Hintergrund ist es Aufgabe der Erfindung, eine alternative Vorrichtung zur Anzucht und zum Schutz von Forst- und/oder Kulturpflanzen bereitzustellen, die insbesondere konstruktiv einfach aufgebaut und kostengünstig in der Herstellung ist.

Diese Aufgabe wird hier jeweils durch die Gegenstände der unabhängigen Ansprüche 1, 11, 13 und 15 gelöst.

Die eingangs genannte Vorrichtung zur Anzucht und zum Schutz von Forst- und/oder Kulturpflanzen weist somit zusätzlich folgende Merkmale auf. Sie umfasst eine über, um und/auf die Trägereinheit aufsetzbare Schutzstruktur, wobei die Dimension der Trägereinheit und der Schutzstruktur derart aufeinander abgestimmt sind, dass in einem Ausgangszustand der Trägereinheit die Schutzstruktur lösbar darauf aufsetzbar ist oder darin einsetzbar und bei Fluidaufnahme durch die Trägereinheit beide ganz oder teilweise fest miteinander verbunden sind. Diese erfindungsgemäße Vorrichtung wird auch als Altmühltaler Pflanztopf bezeichnet.

Die Pflanzvorrichtung gemäß Anspruch 11 umfasst einen zur Vorrichtung zur Anzucht und zum Schutz von Forst- und/oder Kulturpflanzen, insbesondere zur deren Trägereinheit, komplementär ausgebildeten Abschnitt zum Verdrängen von Erdreich, wobei die Eintauchtiefe des Abschnitts über ein Anschlagselement begrenzt ist. Diese erfindungsgemäße Pflanzvorrichtung wird auch als Altmühltaler Locheisen bezeichnet.

Das Verfahren des Anspruchs 13 zur Anzucht und zum Schutz von Forst- und/oder Kulturpflanzen zeichnet sich durch eine solche Vorrichtung aus. Insbesondere umfasst es die Schritte Aufsetzen der Schutzstruktur auf die Trägereinheit, und führt zur Volumenvergrößerung der Trägereinheit und dadurch Schaffen einer festen Verbindung zwischen Schutzstruktur und Trägereinheit. Dieses erfindungsgemäße Pflanzverfahren wird auch als Altmühltaler Pflanzverfahren bezeichnet.

Das Auflegen eines Samens einer Kultur- und/oder Forstpflanze auf die Trägereinheit kann im Anschluss oder vorab erfolgen,
Der Gegenstand des Anspruchs 15 zeichnet sich durch die Verwendung einer erfindungsgemäßen Vorrichtung und/oder einer Pflanzvorrichtung zur Anzucht, zum Schutz und zur Pflanzung von Forst- und/oder Kulturpflanzen aus.

Feste Verbindung zwischen Trägereinheit und Schutzstruktur im Sinne der Erfindung meint, dass die beiden Elemente eine Einheit bilden und bei Normalgebrauch nicht voneinander trennbar sind. Ein gewaltsames Ablösen der Schutzstruktur von der Trägereinheit ist nicht ausgeschlossen, aber bei normale Handhabung weitestgehend bis vollständig ausgeschlossen.

Trockner Ausgangszustand der Trägereinheit im Sinne der Erfindung meint, dass die Trägereinheit keinen oder allenfalls einen prozentual sehr geringen Fluidanteil aufweist, d.h. die Trägereinheit befindet sich in einem nahezu oder vollständig getrockneten Zustand.

Die Trägereinheit umfasst ein geeignetes Substratmaterial, beispielsweise Erde, Kompost, Torf und/oder auch Kokosfasern und/oder deren Mischungen, die in einem komprimierten, kompakten insbesondere gepressten getrockneten Zustand bereitgestellt wird. Das Substratmaterial dient als Wasser- und Luftspeicher und erleichtert einen beschleunigten Aufwuchs der Jungpflanzen im Pflanzjahr.

Die zuvor genannten Quelltöpfe beispielsweise von der Firma Jiffy aus Norwegen, lassen sich als Trägereinheit verwenden. Diese Substratmischungen sind gut geeignet für die Vermehrung verschiedener Baumarten und enthalten insbesondere keinen Kalk, was zu einem niedrigen PH-Wert führt. Auch ist es möglich, vergleichbare Quelltöpfe von anderen Herstellern zu verwenden.

Der Quelltopf wird auch als Substrattablette bezeichnet und besteht entweder aus Kokosfasern, einer geeigneten Kokosfasererdmischung, die getrocknet und gepresst tablettenförmig bereitgestellt ist. Bei Zugabe von Wasser quillt der Quelltopf auf. Dazu kann er beispielsweise für kurze Zeit ins Wasser gestellt werden. Seine Ausgangsgröße kann er nur wieder durch Trocknung und entsprechende Komprimierung bzw. Pressung erreichen.

Durch den Zukauf solcher Quelltöpfe lässt sich eine konsistente Substratmischung gewährleisten sowie eine gut ausgebildete gleichmäßige Wurzelstruktur. Auch lässt sich so der Aufwand für ein Mischen, Kaufen und Kontrollieren der Qualität des Substrates vermeiden. Ebenso lassen sich Maschinenkosten reduzieren. Auch die Arbeitszeit für ein Beschneiden fällt weg.

Das lockere, aufgequollene Substrat weist vorteilhaft eine ausreichende Luft- und Wasserdurchlässigkeit auf, was ein Wurzelwachstum begünstigt. Dies führt innerhalb kurzer Zeit zu einer guten und insbesondere gleichmäßigen Durchwurzelung des Substratmaterials, die insbesondere durch ein sogenanntes "Air Pruning" begünstigt wird. Dabei sterben aus dem Substratmaterial austretende Feinwurzeln an der Luft ab, wodurch sich im Inneren ein verbessertes Wurzelvolumen bzw. eine Durchwurzelung im Substratkörper verbessert. Dies führt zur Ausbildung eines natürlichen Wurzelsystems, das auch ein Anwachsen der Sämlinge verbessert und insbesondere das Risiko eines Pflanzschocks bei späterer Ausbringung der Pflanze, insbesondere im Wald, reduziert. Das ungestörte Wurzelwachstum ist der wichtigste Punkt für die Stabilität und Vitalität eines heranwachsenden Baumes. Ein späteres Umtopfen lässt sich vermeiden. Zusammengefasst, bietet der Quelltopf eine optimale Umgebung für eine einheitliche und schnelle Wurzelbildung.

Die Zusammensetzung des Substrats ermöglicht auch einen hohen Luftanteil, der bis zu 30% betragen kann. Dieser Pflanztopf ist zu 100% kompostierbar und für den Einsatz im biologischen Anbau zugelassen. Bei dem Substrat kann es sich beispielsweise um 100% Torf, oder um eine geeignete Mischung von Torf und Kokosfaser oder auch 100% Kokosfaser handeln. Die Substrattablette kann mit niedrigem oder hohem PH-Wert geliefert werden für eine Gartenbauqualität also für die Anzucht von Kulturpflanzen wird Kalk zugeführt wohingegen für Forstpflanzen keine Kalkzuführung vorgesehen ist.

Das Substratgemisch erlaubt vorteilhaft eine maximale Durchlüftung und eine daraus folgende schnellen Wurzelbildung weshalb die Pflanzen frühzeitig ausgebracht und eingepflanzt werden können. Dazu wird selbstredend herkunftsgerechtes Saatgut verwendet. Vorteilhaft stehen diese Pflanzen innerhalb einer Vegetationsperiode zur Verfügung, weshalb Schadflächen weniger oder geringfügiger vergrasen.

Das hohe Porenvolumen und die daraus resultierenden Drainageeigenschaften ermöglichen unproblematische Bewässerung der Wurzeln wie insbesondere in der Zeitschrift AZ-Der Wald, Ausgabe 21/2017 festgestellt wurde. Bei einem dort getätigten Vergleich zwischen Hartwandtöpfen und Quelltöpfen hat dies ergeben, dass sowohl bei Auflauf- und Überlebensprozenten als auch Sprosslängenwachstum das Quelltopfverfahren besser abschneidet und daher eine bessere Anzuchtmethode darstellt. Insbesondere hat sich dies für vorteilhaft für schnellwüchsigere Baumarten wie Lärche und Fichte erwiesen.

Insgesamt lassen sich stabile und hochwertige Bäume mit einer hohen Einzelbaumstabilität erzeugen. Dies ist ein wesentlicher Unterschied zu dem dargestellten wurzelnackten/insbesondere unterschnittenen Baumschulwaren, die oftmals nach Einsetzen in einem Pflanzschock leiden und insbesondere eingehen.

Vorteilhaft lassen sich solche Sämlinge frühzeitig in die Natur ausbringen und erfordern nur eine kurze Verweildauer in der Baumschule insbesondere von einem Zeitraum von einem halben bis einem Jahr, wodurch sich die Kosten weiter reduzieren lassen. Auch kann ein eine gewisse Selektion schon in der Baumschule vorgenommen werden, so dass nur gut entwickelte Sämlinge verkauft werden. Insgesamt lässt sich so ein niedriger und kostengünstiger Preis für das Produkt und natürlich die nachfolgende Pflanzung erreichen.

Die Schutzstruktur kann geeignete geometrische Ausgestaltungen und Dimensionen aufweisen, sie kann beispielsweise hülsenartig, zylindrisch, eckig, rechteckig, oval, konisch oder auch quaderförmig ausgestaltet sein. Bestimmend sind dabei die Abmessungen und Dimensionen der Trägereinheit und eine dazu ausgebildete komplementäre Ausgestaltung der Schutzstruktur.

Bevorzugt handelt es sich um eine zylindrische bzw. hülsenartige Ausgestaltung der Schutzstruktur, die mit einer zylindrischen Tablette beim Aufquellen durch Wässern in Eingriff geht. Das Einsetzen der Schutzstruktur der Trägereinheit in die Schutzstruktur bzw. der Schutzstruktur auf die Trägereinheit erfordert keine fachliche Vorbildung. Das Aufquellen und damit die feste Verbindung erfolgt einfach durch Wasserzufuhr.

Die Schutzstruktur ist in der Höhe nach Bedarf ausgestaltbar, und kann derart vorgesehen sein, dass sie etwa mit einem Drittel die Trägereinheit oder den Quelltopf umgibt und mit zwei Dritteln sich nach oben erstreckt. Dabei kann sie sich an der erwarteten Wachstumslänge eines Sämlings innerhalb eines Zeitraums von zwei bis drei Jahren sofern gewünscht länger oder kürzer, orientieren. Die Schutzstruktur kann die Trägereinheit bzw. den Quelltopf auf gesamter Höhe/Länge umschließen oder auch nur teilweise. Bei einem Umschließen über die gesamte Länge/Höhe sind der Topf und damit der Sämling beim Transport gut geschützt. Vorteilhaft gibt es keine Limitierungen der Dimensionen insbesondere nicht der Höhenabmessungen der Schutzstruktur.

Die Schutzstruktur schützt den Topf und den Sämling bei Anzucht des Sämlings und insbesondere bei Transport des gezogenen Sämlings, sowie den ausgepflanzten Sämling und bietet bei geeigneter Ausgestaltung zusätzlich noch eine Markierungsmöglichkeit auf der Fläche. Darüber hinaus dient die Schutzstruktur als ein Schutz vor Wildverbiss oder Schnecken oder Kleinstnagern wie etwa Mäusen etc.

Die Schutzfunktion insbesondere beim Transport ist vor allem im Bereich der Forstpflanzen und insbesondere bei der sogenannten Schutzwaldsanierung und der Ausbringung von Forstpflanzen auf Hochgebirgsflächen erforderlich. Beispielsweise im Hochgebirgseinsatz werden die gezogenen Sämlinge mit einem Hubschrauber zu den Einsatz- bzw. Pflanzorten gebracht und müssen von dort zum Teil händisch in geeigneten Tragkisten zum Pflanzort gebracht werden.

Bei der Pflanzung ist die feste Verbindung zwischen Schutzstruktur und Trägereinheit von Vorteil, da die pflanzende Person, insbesondere bei einer händischen Pflanzung einfach die Schutzstruktur ergreifen kann und die gesamte Vorrichtung in ein vorbereitetes Pflanzloch einsetzen kann. Die Pflanzung selbst bedarf keiner gesonderten Vorkenntnisse wie beispielsweise die Ausbringung von wurzelnackten Pflanzen. Insgesamt lassen sich die Kosten für die Pflanze (Sämling) und Pflanzung wesentlich reduzieren, im Vergleich zu herkömmlichen Topfpflanzen um ca. 40 bis 50 %, sowohl im Flachland als auch im Gebirge. Auch sind die Kosten im Vergleich zu zwei- bis dreijährigen in Baumschulen gezogenen wurzelnackten Pflanzen geringer, die insbesondere im Gebirge und Bergwald kaum Aussichten auf ein Anwachsen haben.

Die Pflanzvorrichtung kann als maschinelle oder motormanuelle Pflanzvorrichtung vorgesehen sein. Im Falle einer manuellen Pflanzvorrichtung kann diese beispielsweise mit einem Griff und Stiel entsprechend versehen sein, so dass eine Person diese nach unten in das Erdreich einstoßen kann. Eine solche Ausgestaltung lässt sich mit einfachen Mitteln bereitstellen. Bei einer zylindrischen Trägereinheit ist der komplementär ausgebildete Abschnitt ebenso zylindrisch vorgesehen.

Das Anschlagselement kann beispielsweise in verschiedenen geeigneten Geometrien hergestellt werden. Insbesondere ist dieses als plattenförmiges Anschlagselement, bevorzugt mit einem Durchmesser von 15 bis 25 cm, besonders bevorzugt von 20 cm vorgesehen. Das plattenförmige Anschlagselement wird dann beim Einstoßen der Pflanzvorrichtung in die Erde an deren Oberfläche aufgehalten, so dass die Eindringtiefe des Zylinderabschnitts oder das Erdreich verdrängenden Abschnitts begrenzt ist.

Die Vorrichtung zur Anzucht und zum Schutz von Forst- und/oder Kulturpflanzen kann eine wenigstens teilweise geschlossene Schutzstruktur aufweisen.

Bevorzugt weist die Schutzstruktur über deren Oberfläche ganz oder teilweise Öffnungen auf.

Die Öffnungen können etwa als Einschnitte, Durchbrüche, runde, ovale oder anders geeignete Öffnungen mit geeigneten Geometrien und Dimensionen vorgesehen sein. Vorteilhaft verwirklicht dies einerseits eine ausreichende Wasser- und Luftzufuhr bzw. Zirkulation gegenüber geschlossenen Schutzhülsen. Zusätzlich ermöglicht eine solche Struktur die zuvor dargelegte Verbissschutzfunktion gegenüber Wildtieren und Kleinnagern, Schnecken etc.

Bevorzugt umfasst die Schutzstruktur der Vorrichtung ganz oder teilweise eine GitterMaschen- und/oder Wabenstruktur.

Beispielsweise kann die Schutzstruktur bei Herstellung ausgebildet sein. Deren Material lässt sich z.B. auf einer Rolle anliefern oder auch als flächige Streifen etwa von 20 cm oder 30 cm Länge und Breite. Diese werden zusammengerollt und miteinander verbunden, beispielsweise verklebt, verschweißt oder anders geeignet miteinander befestigt und bilden so die zuvor beschriebene bevorzugte hülsenartige Struktur. Der Vorteil hier liegt in einem geringen Platzbedarf beim Transport der Materialien für die Schutzstruktur. Ebenso werden Beschädigungen beim Transport der Schutzstruktur vermieden.

Die Öffnungen der Schutzstruktur können beliebig geeignete Querschnittsdurchmesser aufweisen. Bevorzugt umfassen die Öffnungen einen Querschnittsdurchmesser von etwa 0,1 cm bis 3 cm auf, besonders bevorzugt von 0,25 cm bis etwa 2 cm und ganz besonders bevorzugt in einem Bereich von etwa 0,5 cm bis etwa 1 cm.

Die letzteren Abmessungen haben sich insbesondere bei der Schneckenabwehr als geeignet erwiesen. Ebenso verhindern sie ausreichend Wildtier- oder Nagetierverbiss. Auch ist damit eine ausreichende Luft- und Wasserzirkulation gewährleistet.

Bevorzugt ist die Schutzstruktur ganz oder teilweise mit einem oder mehreren chemischen oder biologischen Verbissschutzmitteln versehen oder umfasst solche.

Dabei können Verbissschutzmittel wie beispielsweise Biozide, Herbizide, Fungizide oder Rodentizide mit geprüften und zugelassenen handelsüblichen Schutzmitteln insbesondere Verbiss- und Vergräm-Mitteln eingesetzt werden, beispielsweise aufgesprüht, angestrichen. Alternativ und/oder zusätzlich können solche Materialien bzw. Zusätze auch bei der Herstellung der Schutzstruktur aufgenommen und integriert werden.

Die Schutzstruktur kann in Naturfarbe vorgesehen sein, etwa in der Farbe der Ausgangsmaterialien der Schutzstruktur.

Bevorzugt ist die Schutzstruktur ganz oder teilweise mit einer oder mehreren Farbgestaltungen versehen oder umfasst solche.

Dazu können beispielsweise Farbpartikel oder Farbkonzentrate bei der Herstellung der Schutzstruktur dem Material zugeführt werden. Solche Farbpartikel und Konzentrate können insbesondere auf Naturbasis einsetzbar sein und insbesondere auch biologisch abbaubare Farben umfassen.

So lassen sich beispielsweise mit einfachen Mitteln unterschiedliche Baumarten bei Aufforstungen mit unterschiedlichen Farben markieren. Insbesondere bei Signalfarben lässt sich die Auffindbarkeit beim Ausgrasen der Fläche verbessern, also bei einem mehrseitigen und übermäßigen Graswuchs. Dadurch wird ein Beschädigungsrisiko der Pflanzen beim Freischneiden reduziert.

Die Schutzstruktur kann aus einem nicht biologischen Material hergestellt sein, beispielsweise Kunststoffen, etwa ein PE-Material oder Metallgittern. Diese sind jedoch kostenintensiv und haben negative Umwelteinflüsse oder müssen abgebaut werden.

Daher ist bevorzugt die Schutzstruktur aus einem biologisch abbaubaren Material hergestellt.

So lassen sich spätere negative Umwelteinflüsse vermeiden. Insbesondere kann es sich dabei um ein biologisch abbaubares Material, insbesondere gemäß Kompostnorm DIN EN13432 handeln. Beispielsweise Materialien der Firma Bio-Flex F2110 oder Bio-Flex F6510 oder Bio-Flex FX1821 oder Plantagard oder vergleichbare Materialien sind geeignet. Bei den Bioflex-Materialien handelt es sich um biologisch abbaubares und kompostierbares Kunststoff-Compound zur Herstellung von Flachfolien und Spritzgussteilen mit hoher Wandstärke der Firma FKuR Kunststoff GmbH mit Sitz in Willich. Solche Materialien sind innerhalb eines Zeitraums von wenigen Vegetationsperioden, beispielsweise innerhalb von ein bis zwei oder drei Jahren rückstandslos biologisch abbaubar und zersetzbar.

Bevorzugt kann die Vorrichtung ein Sicherungsmittel zur Sicherung der Verbindung zwischen Trägereinheit und Schutzstruktur aufweisen.

Dabei kann es sich beispielsweise um eine bandartige Struktur, etwa nach Art eines Kabelbinders, etc. handeln, die die Verbindung zusätzlich sichert. Diese Maßnahme sichert die feste Verbindung insbesondere bei ruppigen Transportbedingungen.

Bevorzugt kann die Vorrichtung zur Anzucht und zum Schutz von Forst- und/oder Kulturpflanzen eine Stützstruktur zur Sicherung der Schutzstruktur vorsehen.

Dabei kann es sich beispielsweise um einen Stab, einen Pfosten, eine Latte etc. handeln, die einer Stabilisierung und Sicherung der Schutzstruktur dienen. Dazu kann die Schutzstruktur außen oder innen an der Schutzstruktur befestigbar sein, beispielsweise über in der Schutzstruktur vorgesehene Öffnung(en), Laschen, etc. Die Stützstruktur lässt sich zusätzlich beim Pflanzen in die Erde einbringen.

Bevorzugt ist das Substrat der Trägereinheit wenigstens teilweise von einer Haltestruktur, insbesondere einer Netzstruktur umgeben.

Dabei kann es sich um eine elastische Haltestruktur bzw. Netzstruktur, insbesondere um eine biologisch abbaubare Struktur, insbesondere nach DIN EN13432 handeln, beispielsweise Papier, Zellulose oder geeignete Biokunststoffe oder andere geeignete Biomaterialien etwa Baumwolle. Insbesondere beim Netz aus Buchenzellulose handelt es sich um ein Naturprodukt, so dass im Rahmen der Nachhaltigkeit Kunststoffeinsätze vermieden werden können.

Die Haltestruktur bzw. Netzstruktur ermöglicht eine Verpflanzung ohne oder nur einen reduzierten Pflanzschock, da die Substrattabletten insbesondere bei schwacher Bewurzelung auch nicht auseinanderfallen. Auch ist ein Abziehen von Töpfen oder ein Aufräumen von Plastiktöpfen etc. von der Pflanze nicht mehr erforderlich, so dass dies eine umweltfreundliche Alternative zu klassisch verwendeten Kunststoffbehältern darstellt. Auch wird so vermieden, Kunststoffabfälle in die Umwelt auszubringen.

Bevorzugt ist das Anschlagselement der Pflanzvorrichtung höhenverstellbar und/oder der Abschnitt an seinem in das Erdreich eindringenden Ende zugespitzt und/oder abgerundet vorgesehen.

Die Höhenverstellbarkeit lässt sich bspw. über geeignete bekannte Verstellvorrichtungen vorsehen, beispielsweise Klemmen, Schellen, Gewindeabschnitte etc. Ein zugespitztes und/oder abgerundetes Ende erleichtert ein Eindringen in die Erde.

Vorteilhaft lassen sich so verschiedene Pflanztiefen bzw. Eindringtiefen der Pflanzvorrichtung festlegen und eine Pflanzvorrichtung für verschiedene Trägereinheiten mit Schutzstrukturen oder Quelltöpfen mit unterschiedlichen Höhen vorsehen.

Bevorzugt umfasst das Verfahren zur Anzucht und Schutz von Forst- und/oder Kulturpflanzeng die weiteren Schritte: Transport der Vorrichtung mit gezogenen Sämlingen und Pflanzen der Vorrichtung, insbesondere mittels einer Pflanzvorrichtung. Davor kann der Samen auf den Quelltopf aufgesetzt werden.

Pflanzvorrichtungen sind in unterschiedlichen Ausführungen handelsüblich erhältlich. Beispielsweise gibt es Röhren mit einem klappbaren Bodenaufsatz, die in die Erde eingeschoben werden durch eine mechanische Betätigung das Erdreich im Loch zur Seite drängen oder aufnehmen, so dass die Vorrichtung mit dem gezogenen Sämling von oben in die Röhre in das Pflanzloch hineinfallen gelassen werden kann. Dies ermöglicht auch ein Pflanzen durch weniger geschultes Personal. Beispielsweise lassen sich folgende Pflanzwerkzeuge verwenden: Pottiputki-Rohr, Hohlspaten, Rhodener-Haue. Alternativ lässt sich das Altmühltaler-Locheisen gemäß Anspruch 11 (Locheisen in Form des QuellTopfes mit Tiefenbegrenzer) verwenden.

Vorteilhaft ist auch kein spezielles Fachwissen für eine Pflanzung notwendig, was jedoch bei wurzelnackten Pflanzen anders gelagert sind, da hier bereits schon beim Pflanzen Pflanzfehler zu einem Absterben führen können. Aufgrund des gut ausgebildeten Feinwurzelsystems sind diese Pflanzen vorteilhaft auch ganzjährig pflanzbar.

Dieses Pflanzverfahren eignet sich insbesondere für Pflanzungen im stark verunkrauteten Gebieten beispielsweise Kieferbestände. Bei einem zu starken Bodenbewuchs ist eine natürliche Verjüngung nicht möglich und das Einbringen von wurzelnackten Pflanzen ist aufgrund der Verunkrautung kaum möglich.

Hier lässt sich das erfindungsgemäße Pflanzverfahren (Altmühltaler Pflanzverfahren) mit dem erfindungsgemäßen Altmühltaler Pflanztopf einsetzen. Insbesondere lassen sich zunächst Streifen zwischen die Baumreihen einfräsen, was das spätere Ausbringen von Bodenlöchern ergonomisch macht und aufgrund der Pflanzgeschwindigkeit auch kostengünstig gestaltet. Insbesondere das Zwei-Mann-Verfahren kann sich als vorteilhaft erweisen, bei dem eine erste Person mit dem Altmühltaler Locheisen im vorgegebenen Abstand entsprechende Löcher in den Boden des Frässtreifens hineindrängt oder ausbildet und die zweite Person die Altmühltaler Pflanztöpfe im Anschluss in diese Löcher einsetzt. Dadurch lässt sich bei geringen Pflanzungskosten eine Pflanzleistung steigern.

Auch hier schützt die Schutzstruktur die Pflanztöpfe und macht diese gut sichtbar, so dass auch in dem Frässtreifen die Pflanzen leichter aufgefunden werden können. Dabei lässt sich zunächst abwarten, welche Pflanzen tatsächlich anwachsen, um eventuell nachfolgende weitergehende Verbissschutzmaßnahmen zu ergänzen.

Für eine gewisse Zeit ist die Kombination der Schutzstruktur und Trägereinheit auch ohne Wasser lagerbar, da die Erde bzw. der Topf Bestandteil eines natürlichen Wasserspeichers darstellt.

Das Ansetzen und Ausbringen von Baumsämlingen umfasst im Wesentlichen folgende Schritte:
1. Ein Sämling einer bestimmten Baumart wird in einem Quelltopf angesetzt. Dazu wird ein Samen in die Mulde auf der Oberseite des Quelltopfes gelegt.
2. Am Beginn der Ansetzphase wird der Quelltopf, von einer Netzstruktur umgeben. Die Höhe der Röhre kann die Höhe des Quelltopfes sowie die Höhe des zukünftigen Sämlings abdecken.
3. Durch das Aufquellen vergrößert der Quelltopf sein Volumen, wodurch eine stabile Verbindung des Quelltopfes mit der Netzröhre entsteht. Zusätzlich wachsen auch die Wurzeln in die Maschen der Netzröhre.
4. Der solcherart mit der Netzröhre verbundene Quelltopf, wird nach ca. einem halben bis einem Jahr in den Boden ausgesetzt.

### Figurenbeschreibung

Ausführungsbeispiele der Erfindung sind im Folgenden unter Bezugnahme auf die beigefügten schematischen Zeichnungen näher erläutert. In den Zeichnungen zeigen:
Fig. 1 eine perspektivische Darstellung einer erfindungsgemäßen Vorrichtung mit in die Schutzstruktur eingesetzter Trägereinheit in einer Ansicht schräg von oben;
Fig. 2 eine perspektivische Darstellung der Trägereinheit aus Fig. 1;
Fig. 3 eine perspektivische Darstellung der Schutzstruktur aus Fig. 1;
Fig. 4 eine perspektivische Darstellung der erfindungsgemäßen Vorrichtung aus Fig. 1, bei der die Trägereinheit und Schutzstruktur miteinander verbunden sind;
Fig. 5 zeigt eine perspektivische Darstellung einer Kastenstruktur zum Transport und zur Anzucht der Quelltöpfe; und
Fig. 6 zeigt eine perspektivische Darstellung einer Pflanzvorrichtung.

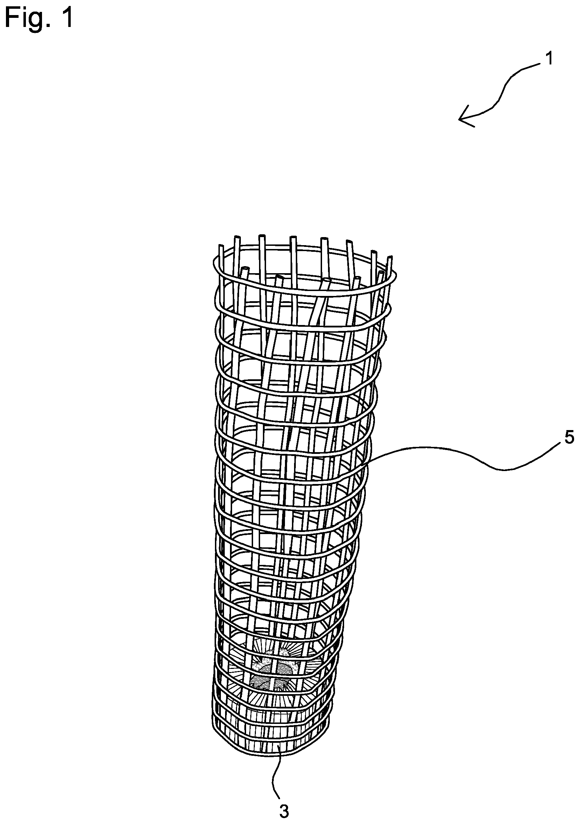

Der Aufbau und die Funktion der erfindungsgemäßen Vorrichtung zur Anzucht und zum Pflanzen von Kultur- und Forstpflanzen 1 wird nachfolgend anhand der Fig. 1 bis 4 erläutert.

Es gelten durchgehend für sämtliche Figuren dieselben Bezugszeichen.

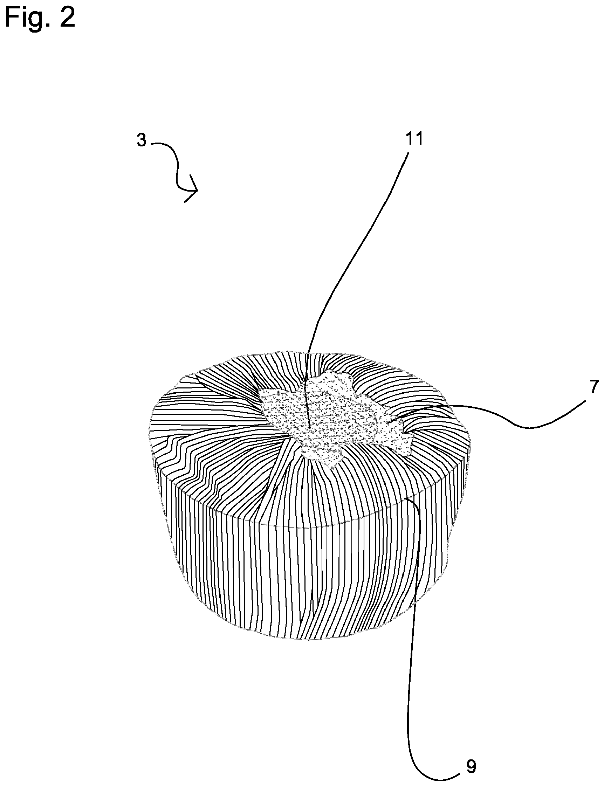

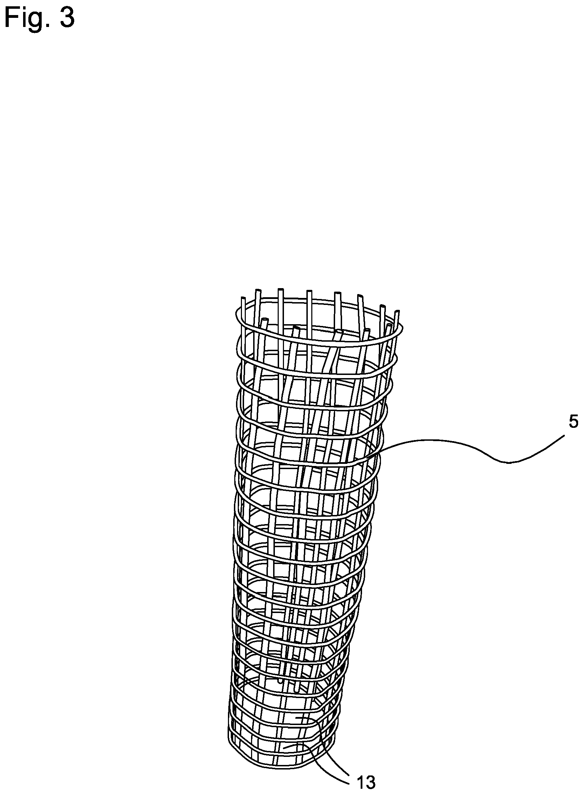

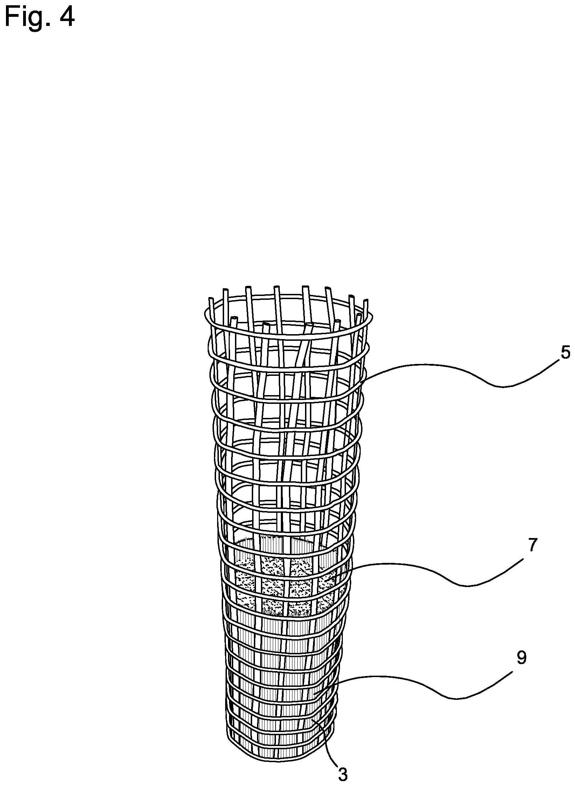

Fig. 1 zeigt eine perspektivische Darstellung der Vorrichtung 1 mit einer in eine Schutzstruktur 5 eingesetzten Trägereinheit 3. Fig. 2 zeigt die Trägereinheit in Alleinstellung und Fig. 3 die Schutzstruktur 5 in Alleinstellung. In Fig. 4 sind die Trägereinheit 3 und die Schutzstruktur 5 miteinander verbunden, nachdem die Trägereinheit durch Fluidzufuhr aufgequollen ist.

Die Trägereinheit 3 ist als ein sogenannter Quelltopf vorgesehen. Ein solcher Pflanz- bzw. Quelltopf 3 ist an sich bekannt. Dieser wird beispielsweise von der Firma Jiffy Group unter der Produktbezeichnung Jiffy 7 Forestry Plug vertrieben (vgl. auch www.jiffygroup.com/jiffy-product/jiffy-7-forestry/).

Die Trägereinheit 3 ist als eine Substrattablette vorgesehen, die aus geeigneten Pflanzsubstraten gepresst und getrocknet ist. Das Substratmaterial 7 basiert auf erneuerbaren Ressourcen und Biobasierten Materialien, wie zum Beispiel Torf, Kokosfaser, Zellstoff, pflanzliche Stärke und andere Biomasse.

Das Substratmaterial 7 ist von einer dünnen Netzhülle 9 umgeben, die beispielsweise aus einem biologisch abbaubaren Zellulosematerial oder vergleichbar geeigneten Materialien hergestellt ist. An der Oberseite des Pellets 3 bzw. der Substrattablette 3 ist in etwa mittig eine Aussparung 11 vorgesehen, in die ein Pflanzensamen eingelegt wird. Fig. 1 und 2 zeigen den Quelltopf 3 im komprimierten und trockenen Zustand mit einem minimalen Flüssigkeitsanteil.

Bei Zugabe von Wasser bzw. Fluid vergrößert die Substrattablette 3 ihr Volumen (vgl. Fig. 4) sowohl in der Höhe, etwa um das 3-fache) als auch in der Breite bzw. ihrem Außenumfang.

Die Substrattablette ist rund ausgebildet. Das Netz 9 bildet eine sogenannte offene Topfwand, was für den Anbau von Bäumen besonders wichtig ist, da sich so ein sogenanntes "Air-pruning" (ein Stutzen der Wurzeln durch Luft) begünstigen lässt.

Nach der Volumenvergrößerung und im feuchten Zustand behält die Trägereinheit 3 ihre Größe und ermöglicht die Ausbildung eines stabilen Wurzelsystems, da das Wurzelwachstum nicht gehemmt wird. Der Kokosfaseranteil ermöglicht eine gute Durchlüftung.

Die in Fig. 3 gezeigte Schutzstruktur 5 ist als Gitterstruktur mit gleichmäßig verteilten Maschen 13 mit einer Maschenweite von etwa 0,5 bis 1 cm ausgebildet. Diese Maschengröße ist derart gewählt, dass beispielsweise Schnecken oder auch Wildtiere keine Möglichkeit haben, die Pflanzen zu beschädigen. Aber auch andere Maschenweiten sind möglich.

Das Material besteht aus einem "biologisch abbaubaren Werkstoff nach DIN EN 13432, beispielsweise das Material Bio-Flex F2110, Bio-Flex F6510 oder Bio-Flex FX1821 oder ist aus anderen geeigneten vergleichbaren Materialien hergestellt. Diese Materialien können beispielsweise auch für Heimkompost oder ähnliches zertifiziert sein.

Die Maschenstruktur 5 kann beispielsweise in einem Naturfarbton vorgesehen sein oder aber unterschiedliche Farben aufweisen; dazu lassen sich bei der Herstellung bspw. verschiedene Farbkonzentrate auf Naturbasis zugeben, die auch als biologisch abbaubar sind. Je nach Stärke des Materials kann die Abbaudauer ein bis zwei oder drei bis vier Jahre oder jedenfalls länger betragen.

Eine geeignete Breite der Maschenstruktur im flachen Zustand kann bspw. 20 cm betragen Zum Einsatz bei der erfindungsgemäßen Vorrichtung 1 wird die flächige Maschenstruktur aufgerollt und deren Enden jeweils in Längsrichtung miteinander verbunden, bspw. verklebt oder verschweißt. Auch zylindrische Maschenstrukturen lassen sich bereitstellen. Die Abmessungen der dann hülsenartig vorliegenden Maschenstruktur 5 sind in etwa so gewählt, dass die Trägereinheit bzw. Substrattablette 3 lösbar in die Maschenstruktur 5 einsetzbar ist, solange kein Fluid zugegeben wird.

Nach Fluidzugabe, beispielsweise Wasser quillt wie in Fig. 4 gezeigt, die Trägereinheit 3 derart auf, dass sie mit der Maschenstruktur 5 eine feste Verbindung bildet. Diese Verbindung ist derart fest vorgesehen, dass beispielsweise bei einem Ergreifen der Maschenstruktur 5 die Trägereinheit 3 nicht zusätzlich gehalten werden muss, sondern sich eine in der Maschenstruktur 5 gewachsene Pflanze bzw. Sämling transportieren lässt. Nach Auflage des Samens in die Mulde 11 wächst so in einem Zeitraum von etwa einem halben bis einem Jahr ein geeigneter Sämling, der vollständig von der Maschenstruktur 5 geschützt ist. Dieser Schutz dient einerseits beim Transport, beispielsweise auf Hochgebirgsflächen als auch in Transportboxen, Kisten, etc.

Die farbige Ausgestaltung der Maschenstruktur 5 ermöglicht ein schnelles Auffinden im Gelände, so dass insbesondere beim Ausgrasen, also bei einem Entfernen oder Kurzschneiden des umgebenden Grasbewuchses, nach Ausbringung der erfindungsgemäßen Vorrichtung im Gelände ein unbeabsichtigtes Ausschneiden oder Beschädigen des Sämlings vermeiden lässt.

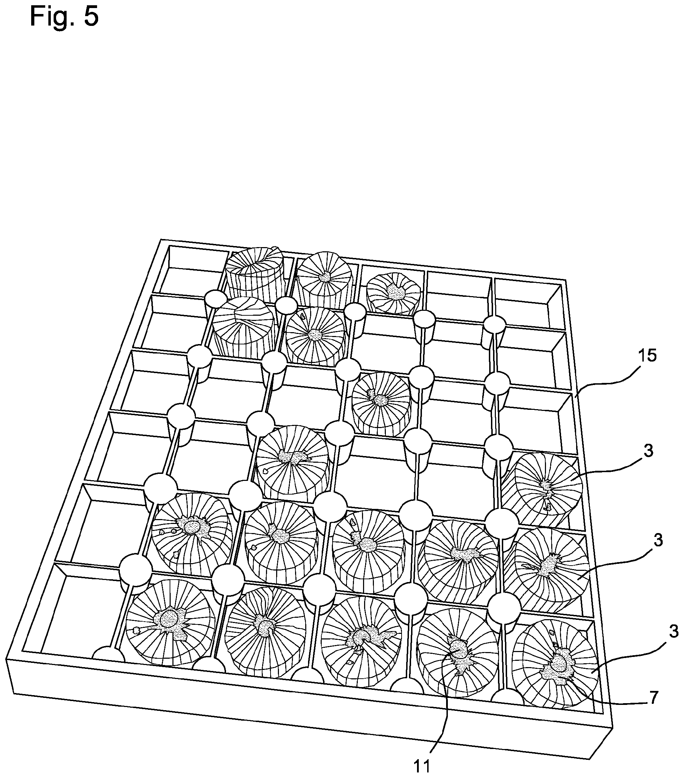

Fig. 5 zeigt eine perspektivische Darstellung einer Kastenstruktur 15 zum Ansetzen von Forstpflanzen und deren Transport oder dem Transport der Quelltöpfe alleine oder in Verbindung mit der Schutzstruktur beziehungsweise Gitterstruktur 5. Beim Vorsehen eines Tragegriffs lassen sich die gezogenen Sämlinge einfach beim Pflanzen transportieren und dadurch die Einzelpflanzzeiten deutlich reduzieren. Der Sämling lässt sich jeweils am Gitter greifen und aus den jeweiligen Transportkisten entfernen.

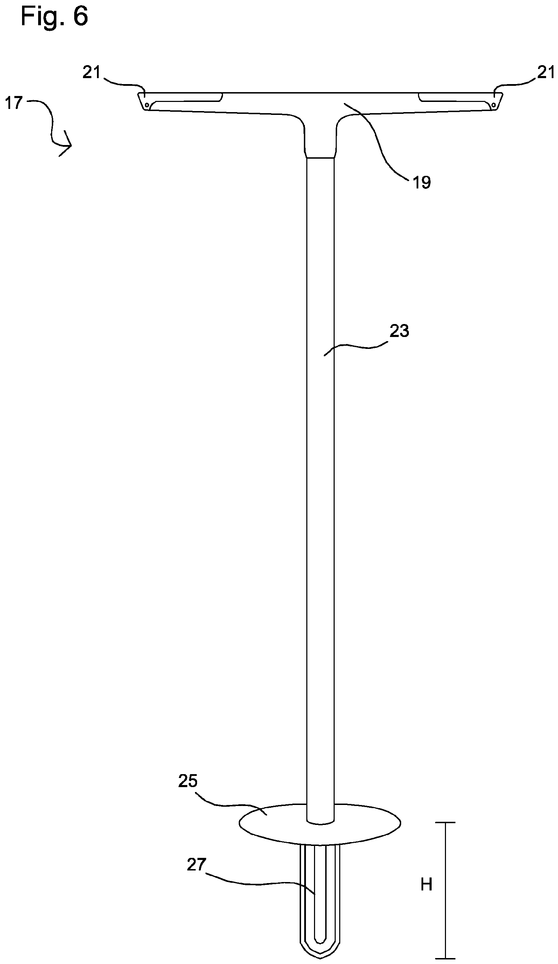

Die in Fig. 6 gezeigte Pflanzvorrichtung 17 wird auch als "Altmühltaler Locheisen" bezeichnet. Dieses umfasst einen Griff 19 mit zwei daran seitlich ausgebildeten Betätigungshandhaben 21. In etwa deren Mitte verläuft ein Stiel 23 nach unten zu einem Anschlagselement 25, das als Anschlagsplatte ausgebildet ist. Ein Durchmesser von 15 bis 25 cm bevorzugt 20 cm hat sich als geeignet erwiesen. Die Anschlagsplatte 25 dient als Anschlag des Locheisens und verhindert ein zu tiefes Eindringen in die Erde.

Unterhalb der Anschlagsplatte 25 ist ein zylindrischer Abschnitt oder Zylinder 27 vorgesehen, der einen zu der Vorrichtung 1 zur Anzucht zum Schutz von Forst- und/oder Kulturpflanzen komplementären Außendurchmesser aufweist. An seinem unteren Ende ist der Zylinder 27 angespitzt oder abgerundet vorgesehen. Dabei hat sich insbesondere ein Außendurchmesser von 4,5 bis 8 cm, bevorzugt 5,5 cm als gut geeignet erwiesen. Dieser entspricht in etwa dem Außendurchmesser der Vorrichtung 1.

Der Zylinderabschnitt hat eine Höhe H, die der Pflanztiefe entsprechen soll. Diese ist geeignet auswählbar und beträgt ca. zwischen 10 und 20 cm bevorzugt zwischen 11 und 16 cm.

Zum Einpflanzen wird das Altmühltaler Locheisen 17 senkrecht in den Boden hineingedrängt, wodurch sich ein Loch in der Erde (nicht gezeigt) ausbilden lässt, das in etwa dem Außendurchmesser des Zylinderabschnitts 27 entspricht. Anschließend wird das Locheisen 17 nach oben herausgenommen und ein Loch verbleibt im Erdreich.

Weitere vorteilhafte Ausgestaltungen der Erfindung ergeben sich für den Fachmann Rahmen der nachstehenden Patentansprüche.

## Patentansprüche

1. Vorrichtung (1) zur Anzucht und zum Schutz von Forst- und/oder Kulturpflanzen umfassend:
eine Trägereinheit (3), die aus einem Substrat besteht und deren Volumen durch Fluidaufnahme vergrößerbar ist,
gekennzeichnet über
eine um die Trägereinheit (3) aufsetzbare Schutzstruktur (5),
wobei die Dimensionen der Trägereinheit (3) und der Schutzstruktur (5) derart aufeinander abgestimmt sind, dass in einem trocknen Ausgangszustand der Trägereinheit (3) die Schutzstruktur (5) lösbar um die Trägereinheit (3) aufsetzbar ist und nach Fluidaufnahme der Trägereinheit (3) beide fest miteinander verbunden sind.

2. Vorrichtung (1) zur Anzucht und zum Schutz von Forst- und/oder Kulturpflanzen nach Anspruch 1, bei der die Schutzstruktur (5) ganz oder teilweise mit Öffnungen (13) versehen ist.

3. Vorrichtung (1) zur Anzucht und zum Schutz von Forst- und/oder Kulturpflanzen nach Anspruch 2, bei der die Schutzstruktur (5) ganz oder teilweise eine Gitter-, Maschen- und/oder Wabenstruktur aufweist.

4. Vorrichtung (1) zur Anzucht und zum Schutz von Forst- und/oder Kulturpflanzen nach Anspruch 2 oder 3, bei der die Öffnungen der Schutzstruktur (5) einen Querschnittsdurchmesser von etwa 0,1 cm bis etwa 3 cm aufweisen, bevorzugt von etwa 0,25 cm bis etwa 2 cm, besonders bevorzugt von etwa 0,5 cm bis etwa 1 cm.

5. Vorrichtung (1) zur Anzucht und zum Schutz von Forst- und/oder Kulturpflanzen nach einem der vorstehenden Ansprüche, bei der die Schutzstruktur (5) ganz oder teilweise mit einem oder mehreren chemischen oder biologischen Schutzmitteln versehen ist oder solche umfasst.

6. Vorrichtung (1) zur Anzucht und zum Schutz von Forst- und/oder Kulturpflanzen nach einem der vorstehenden Ansprüche, bei der die Schutzstruktur (5) ganz oder teilweise mit einer oder mehreren Farbgestaltungen versehen ist oder solche umfasst.

7. Vorrichtung (1) zur Anzucht und zum Schutz von Forst- und/oder Kulturpflanzen nach einem der vorstehenden Ansprüche, bei der die Schutzstruktur (5) aus einem biologisch abbaubares Material hergestellt ist.

8. Vorrichtung (1) zur Anzucht und zum Schutz von Forst- und/oder Kulturpflanzen nach einem der vorstehenden Ansprüche, bei der ein Sicherungsmittel zur Sicherung der Verbindung von Trägereinheit (3) und Schutzstruktur (5) vorgesehen ist.

9. Vorrichtung (1) zur Anzucht und zum Schutz von Forst- und/oder Kulturpflanzen nach einem der vorstehenden Ansprüche, bei der eine Stützstruktur zur Sicherung der Schutzstruktur (5) vorgesehen ist.

10. Vorrichtung (1) zur Anzucht und zum Schutz von Forst- und/oder Kulturpflanzen nach einem der vorstehenden Ansprüche, bei der das Substrat (7) der Trägereinheit (3) wenigstens teilweise von einer Haltestruktur (9) umgeben ist.

11. Pflanzvorrichtung (17) zum Einpflanzen einer Vorrichtung (1) zur Anzucht und zum Schutz von Forst- und/oder Kulturpflanzen nach einem der Ansprüche 1 bis 10, umfassend einen zur Vorrichtung (1), insbesondere zu deren Trägereinheit (2), in etwa komplementär ausgebildeten Abschnitt (27) zum Verdrängen von Erdreich, wobei die Eintauchtiefe des Abschnitts (27) über ein Anschlagselement (25) begrenzt ist.

12. Pflanzvorrichtung (17) nach Anspruch 11, bei der das Anschlagselement (25) höhenverstellbar und/oder der Abschnitt (27) an seinem in das Erdreich eindringenden Ende zugespitzt und/oder abgerundet vorgesehen ist.

13. Verfahren zur Anzucht und zum Schutz von Forst- und/oder Kulturpflanzen mittels einer Vorrichtung (1) nach einem der Ansprüche 1 bis 10 umfassend die Schritte:
- Aufsetzen der Schutzstruktur (5) um die Trägereinheit (3)
- Fluidzufuhr zur Volumenvergrößerung der Trägereinheit (3) und dadurch Bilden einer festen Verbindung zwischen Schutzstruktur (5) und Trägereinheit (3).

14. Verfahren zur Anzucht und zum Schutz von Forst- und/oder Kulturpflanzen nach Anspruch 10 umfassend die Schritte:
- Auflegen eines Samens einer Kultur- und oder Forstpflanze auf die Trägereinheit (3),
- Transport der Vorrichtung (1) mit darin gezogenem Sämling und
- Pflanzen der Vorrichtung, insbesondere mittels einer eine Pflanzvorrichtung nach Anspruch 11 oder 12.

15. Verwendung einer Vorrichtung (1) nach einem der Ansprüche 1 bis 10 und/oder einer Pflanzvorrichtung (17) nach Anspruch 11 oder 12 zur Anzucht, zum Schutz und/oder zur Pflanzung von Forst- und/oder Kulturpflanzen.
